# EUROPEAN PATENT SPECIFICATION

(11) **EP 2 532 545 B1**
(45) Date of publication and mention of the grant of the patent: **02.04.2014**
(21) Application number: 11737132.8
(22) Date of filing: 28.01.2011
(51) Int. Cl.: B60J 1/20

(54) **VEHICLE WINDOW SHADE DEVICE**
BLENDENVORRICHTUNG FÜR FAHRZEUGFENSTER
DISPOSITIF D'OCCULTATION D'UNE VITRE DE VÉHICULE

(30) Priority: 01.02.2010 JP 2010019991
(43) Date of publication of application: 12.12.2012
(73) Proprietor: Ashimori Industry Co., Ltd., Osaka-shi, Osaka 550-0014 (JP)
(72) Inventor: OJIMA, Shinya, Settsu-shi Osaka 566-0001 (JP)
(74) Representative: Kilian Kilian & Partner
(86) International application number: PCT/JP2011/051695
(87) International publication number: WO 2011/093422

(56) References cited:
- EP-A1- 1 418 073
- DE-A1- 10 062 682
- DE-A1-102008 045 053
- DE-U1-202004 020 095
- JP-A- 2000 135 249
- JP-A- 2004 306 904

## Description

### Technical Field

The present invention relates to a vehicle window shade device according to the preamble of claim 1.

### Background Art

A conventional vehicle window shade device of this type is disclosed in Patent Document 1. In Patent Document 1, a pivotable cover is provided on a guide slit for guiding a window shade. This cover is prestressed into an open position by a pressure spring. Further, the cover is closed by operating the actuating arm by means of excess travel of the actuating element coupled to the window shade.

### Prior Art Document

### Patent Document

Patent Document 1: Japanese Patent Application Laid-Open No. 2004-136881 (corresponding European application: EP 1418073 A).

### Summary of the Invention

### Problem to be Solved by the Invention

In the technology disclosed in Patent Document 1, unfortunately, the configuration is made such that the cover is closed upon pushing of the actuating arm by the actuating element when the window shade is wound up, where the position of the window shade and the position of the cover operate together approximately one to one. Accordingly, if the position at which the window shade is completely wound up and the position at which the cover is completely closed become misaligned, there may arise a problem that the cover is not completely closed even in a case where the window shade is completely wound up.

Therefore, an object of the present invention is to enable to close a cover more completely in conjunction with winding-up of a shade.

### Means to Solve the Problem

In order to solve the above-mentioned problem, a first aspect relates to a vehicle window shade device that covers a window of a vehicle for allowing the window to be shielded and opened, which includes: a window shade configured to shield the window; a stay attached to a drawing-direction-side edge of the window shade; a windup device winding up the window shade in a manner of being drawn therefrom and housed therein; a case in which the windup device is disposed, including a gap portion in the drawing and housing directions of the window shade; a frame covering the gap portion and including a drawing slit configured to allow the stay to slide; a cover provided in the drawing slit to be opened and closed; a biasing member biasing the cover toward an open direction; and a transmission member transmitting an action of the stay attached to the window shade wound up by the windup device to the cover as a force in a direction in which the cover is closed, wherein at least one of the cover, the stay and the transmission member includes a difference absorbing mechanism installed therein, the difference absorbing mechanism absorbing a difference between the action of the stay and the action of the cover.

According to a second aspect, in the vehicle window shade device of the first aspect, the transmission member includes: a movable body provided so as to move along the drawing and housing directions of the window shade, and moving toward the housing direction side of the window shade when being pushed by the stay upon winding up of the window shade; and a connecting member connecting the cover and the movable body so as to move the cover in the closing direction upon movement of the movable body toward the housing direction side of the window shade and allow the cover to move toward the open direction upon movement of the movable body toward the drawing direction side of the window shade.

According to a third aspect, in the vehicle window shade device of the second aspect, the difference absorbing mechanism is disposed so as to change a position thereof such that the movable body retracts from a moving path of the stay in a state in which the stay pushes the movable body until the cover closes upon winding up of the window shade.

According to a fourth aspect, in the window shade device of any one of the first to third aspects, the cover is mounted to the frame so as to slide.

### Effects of the Invention

According to the first aspect, the action of the stay attached to the window shade wound up by the windup device is transmitted to the cover as the force in the direction in which the cover is closed via the transmission member, whereby the cover is closed in conjunction with winding up of the shade. On this occasion, the difference absorbing mechanism that absorbs a difference between the action of the stay and the action of the cover is provided in at least one of the cover, the stay and the transmission member, which enables setting such that the cover is closed more completely in conjunction with the action of the stay.

According to the second aspect, the movable body is pushed by the stay upon winding up of the window shade and then moves toward the housing direction side of the window shade. As a result, the cover moves in the closing direction via the connecting member. When the window shade is drawn, the cover is allowed to move toward the open direction upon movement of the movable body toward the drawing direction side of the window shade, whereby the cover is opened by the biasing force of the biasing member.

According to the third aspect, the movable body retracts to the position out of the moving path of the stay in the state in which the stay pushes the movable body until the cover closes upon winding up of the window shade. Accordingly, the difference between the moving amount of the stay and the moving amount of the cover can be absorbed, which enables to close the cover more completely.

According to the fourth aspect, the cover is prevented from projecting in the open state.

### Brief Description of Drawings

FIG. 1 is a perspective view showing the overall configuration of a vehicle window shade device.
FIG. 2 is an explanatory view showing the configuration for opening and closing a cover in a state in which the cover is closed.
FIG. 3 is an explanatory view showing the configuration for opening and closing the cover in a state in which the cover is opened.
FIG. 4 is a view explaining FIG. 3 in a partially transparent manner.
FIG. 5 is an explanatory view showing the operation of opening and closing the cover.
FIG. 6 is an explanatory view showing the operation of opening and closing the cover.
FIG. 7 is an explanatory view showing the operation of opening and closing the cover.

### Embodiment for Carrying Out the Invention

A vehicle window shade device according to an embodiment is described below.

### <Overall configuration of vehicle window shade device>

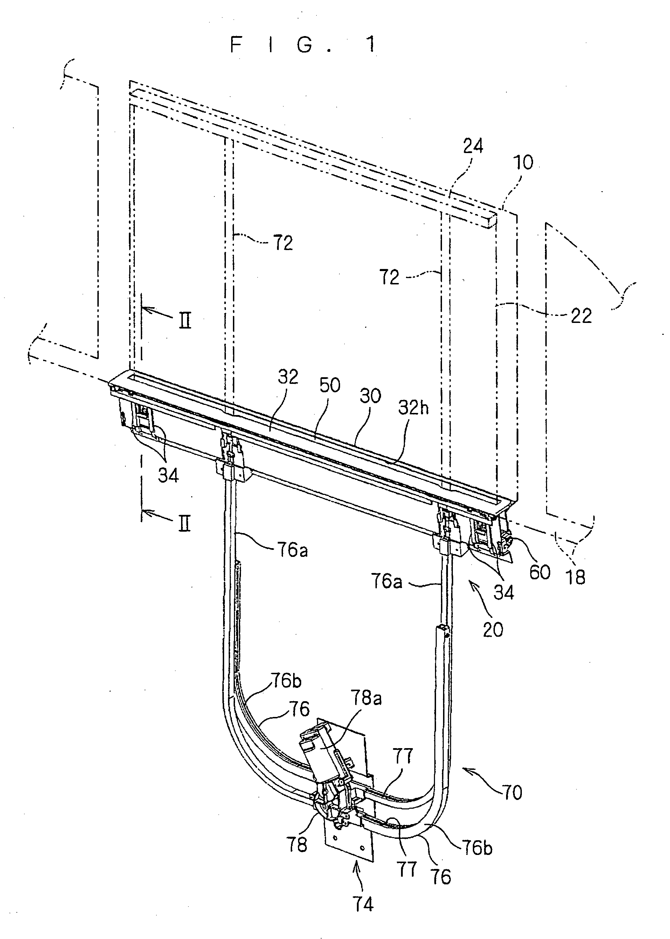

FIG. 1 is a perspective view showing the overall configuration of a vehicle window shade device 20. Description is given here assuming that the vehicle window shade device 20 covers a side window 10 of a rear seat. Needless to say, the vehicle window shade device may serve to cover, for example, a side window on a side of a cargo room or a rear window thereof.

The vehicle window shade device 20 is installed in a panel part extending along one side of the side window 10. In this case, the vehicle window shade device 20 is installed in an upper side portion of a door panel 18 positioned below the side window 10. The vehicle window shade device 20 is configured such that upon drawing of a window shade 22 along the car-room-side surface of the side window 10 from the vehicle window shade device 20, the window shade 22 covers the side window 10 for allowing the side window 10 to be shielded and opened.

The vehicle window shade device 20 includes the window shade 22, a stay 24, a windup device 60 and a frame 30.

The window shade 22 is a sheet-like member formed by, for example, cutting and sewing a material such as mesh-like fabric or resin sheet. In this case, the window shade 22 is formed to have approximately the same size and shape as those of the target side window 10, which serves to shade the entire side window 10. Needless to say, the window shade 22 may be formed to have a shape and a size so as to shield a part of a target window or to have a shape and a size so as to shield a plurality of windows in a collective manner.

The stay 24 is attached to a drawing-direction-side edge of the window shade 22. In this case, the window shade 22 is wound up by the windup device 60 and is drawn upwardly from the windup device 60 along the window shade 22, and thus, the upper edge of the window shade 22 is the drawing-direction-side edge. The stay 24 is formed as a long-rod-like member corresponding to the length dimension of the upper edge portion of the window shade 22. The stay 24 is formed to have a thickness dimension so as to be disposed in the frame 30 through a drawing slit 32h described below. The stay 24 is disposed in the frame 30 in the state in which the window shade 22 is wound up and housed and, when the stay 24 is drawn out of the frame 30 through the drawing slit 32h from this state to move upwardly, the window shade 22 is drawn along the side window 10.

The frame 30 is a long member formed of a resin or the like, and is mounted at a position along one side of the side window 10, in this case, to the upper portion of the door panel 18. The frame 30 includes a surface plate portion 32 facing the side window 10 side, and the long slender drawing slit 32h extending along one side edge (in this case, lower edge) of the side window 10 is formed in the surface plate portion 32. The drawing slit 32h has a length dimension set to be larger than the width dimension of the window shade 22, and the window shade 22 is drawn from the frame 30 toward the side window 10 side through the drawing slit 32h.

The frame 30 is provided with a cover 50 that enables to open and close the drawing slit 32h. The cover 50 is automatically opened and closed upon drawing and housing of the window shade 22. The configuration therefor is described below in detail.

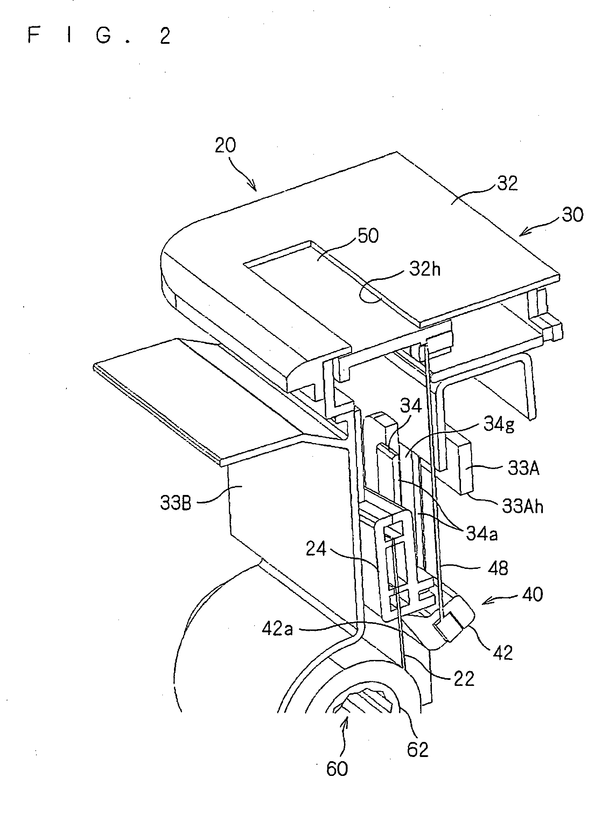

The windup device 60 is configured to wind up the window shade 22 so as to be drawn and housed. More specifically, the windup device 60 is a member mounted in the frame 30 and includes a windup shaft portion 62 capable of winding up the window shade 22 (see FIG. 2 to FIG. 4). The windup shaft portion 62 is rotatably mounted to the frame 30 and is rotatably biased by a biasing member such as a coil spring (not shown).

The proximal edge being one edge of the window shade 22 is connected and fixed to the windup shaft portion 62 so as not to rotate and, if the windup shaft portion 62 rotates in a windup direction by the biasing force by the biasing member, the window shade 22 is wound up and housed by the windup shaft portion 62 until the stay 24 is positioned in the frame 30 through the drawing slit 32h. If the stay 24 is pulled from this state, the windup shaft portion 62 rotates in a direction opposite to the windup direction against the biasing force of the biasing member, so that the window shade 22 is drawn along the side window 10 through the drawing slit 32h.

In the present embodiment, there is provided a shade drive mechanism 70 that drives the window shade 22 to be drawn and housed. The shade drive mechanism 70 is a device that draws and houses the window shade 22 by causing the stay 24 to move close to and apart from the windup shaft portion 62 in a state in which the stay 24 keeps a position approximately parallel to the axis of the windup shaft portion 62. In this case, the shade drive mechanism 70 includes a pair of arms 72 and an arm drive portion 74 that drives the pair of arms to advance and retract.

The pair of arms 72 are long members formed of a resin or the like and are supported to advance toward and retract from the frame 30 so as to extend along the car-room-side surface of the side window 10 through the drawing slit 32h. Tips of the pair of arms 72 are connected to the stay 24 and move to be close to or apart from the windup shaft portion 62 as described above upon advancing and retracting of the pair of arms 72.

The arm drive portion 74 is installed in the door panel 18 inside the frame 30. The arm drive portion 74 includes a pair of guide members 76, a pair of linear rack tooth members 77 and a rack drive portion 78.

The pair of guide members 76 and the pair of linear rack tooth members 77 are respectively provided correspondingly to the pair of arms 72.

The guide member 76 includes a linear part 76a and a curved part 76b and has an approximately J-like shape in its entirety. The linear parts 76a of the pair of guide members 76 are fixed so as to extend below the pair of frames 30 and support the arms 72 in a slidable manner. The linear part 76a and the curved part 76b are configured to guide and support the linear rack tooth member 77, and the pair of curved parts 76b extend so as to overlap each other between the pair of linear parts 76a.

The linear rack tooth member 77 is formed of a linear member that has flexibility and is not easily bent when being pushed, such as a resin, and a plurality of teeth are formed such that irregularities are continuous linearly on one surface thereof. One end of the linear rack tooth member 77 is connected to the proximal end of the arm 72 with the linear part 76a of the guide member 76. The linear rack tooth member 77 is guided to pass from the linear part 76a to the curved part 76b.

The rack drive portion 78 is provided between the pair of linear parts 76a and includes gears for rack (not shown) meshable with the linear rack tooth member 77 at the pair of curved parts 76b and a motor 78a that rotatively drives the gears. The rotational drive force of the motor 78a is transmitted as the force for rotatively driving a pair of gears for rack in the opposite directions via a gear such as a bevel gear, pulley or the like. When the pair of gears for rack are rotatively driven in the directions opposite to each other, the pair of linear rack tooth members 77 are driven to advance and retract in synchronization, and accordingly, the pair of arms 72 are driven to advance and retract in synchronization. When the pair of arms 72 are driven to advance, the stay 24 moves in a direction in which the stay 24 becomes apart from the windup shaft portion 62, and the window shade 22 is drawn along the side window 10. Then, when the pair of arms 72 are driven to retract, the windup shaft portion 62 rotates in the windup direction by the biasing force of the biasing member with the stay 24 moving in the direction in which the stay 24 becomes closer to the windup shaft portion 62, so that the window shade 22 is wound up and housed by the windup shaft portion 62.

The configuration for driving the window shade 22 to be drawn and housed is not limited to the above-mentioned example. For example, the arm may be driven to advance and retract by pulling a wire upon driving of a motor or the like. Alternatively, the configuration may be made such that a pair of rails are provided on both sides of the window such that the both ends of the stay are driven to move along the rails, instead of driving the arm to advance and retract. Still alternatively, the configuration in which the window shade 22 is driven to be drawn and housed is not provided, but the configuration in which a handle or the like for drawing is provided to the stay and the window shade is manually drawn and housed may be provided.

### <Configuration for opening and closing cover>

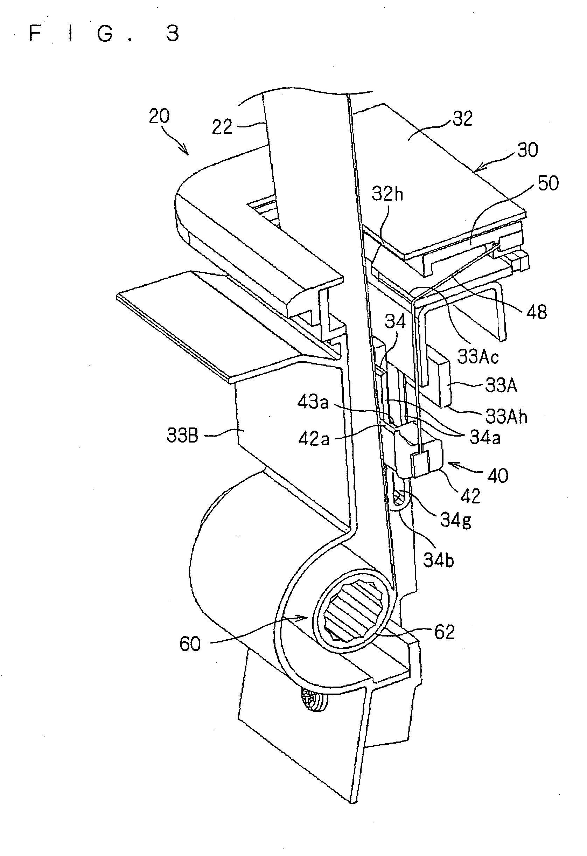

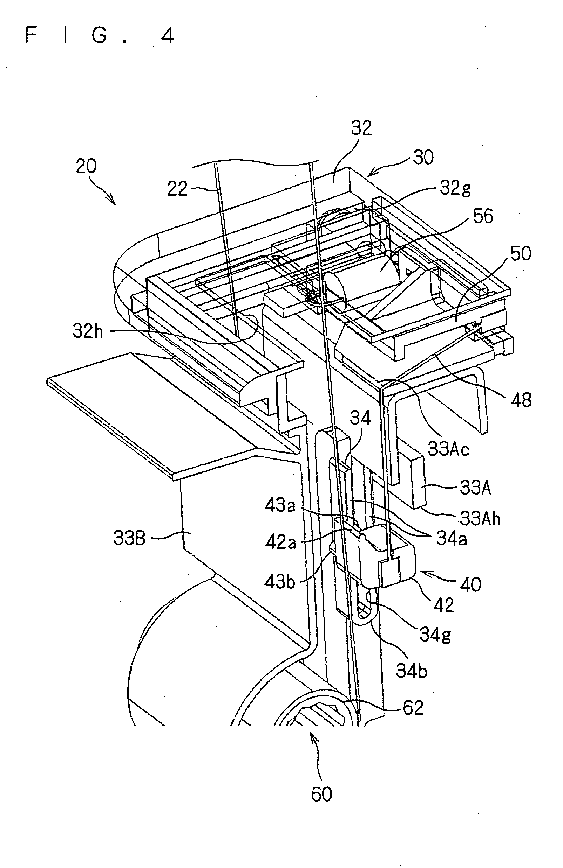

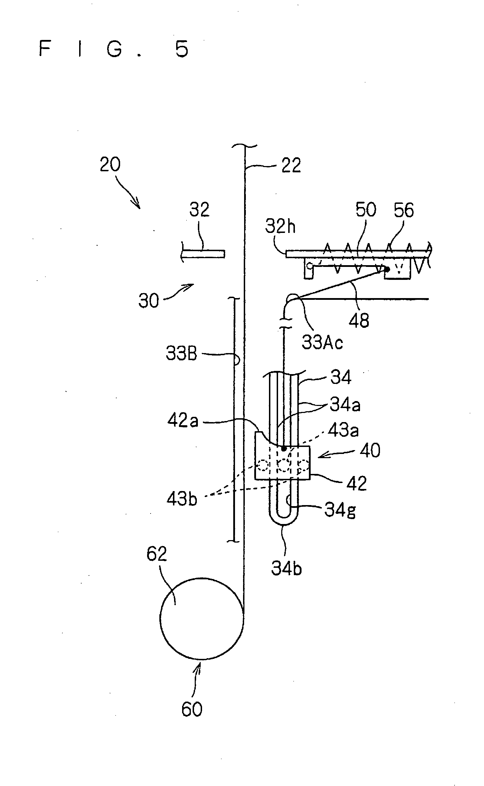

FIG. 2 is an explanatory view showing the configuration for opening and closing the cover 50 in the state in which the cover 50 is closed, FIG. 3 is an explanatory view showing the configuration for opening and closing the cover 50 in the state in which the cover 50 opens, and FIG. 4 is a view explaining FIG. 3 in a partially transparent manner. Note that FIG. 2 to FIG. 4 are perspective views showing the parts obtained by cutting the vehicle window shade device 20 by the line II-II of FIG. 1. FIG. 5 to FIG. 7 are explanatory views showing the operation of opening and closing the cover 50.

As shown in FIG. 1 to FIG. 7, the vehicle window shade device 20 includes a coil spring 56 as a biasing member and a transmission member 40 as the configuration for opening and closing the cover 50 in conjunction with drawing and housing of the window shade 22.

Description is given here of the action of the stay 24 in the frame 30. That is, the frame 30 includes a first inner plate portion 33A and a second inner plate portion 33B inside the surface plate portion 32. The first inner plate portion 33A and second inner plate portion 33B are disposed to be opposed to each other with a spacing so as to sandwich the window shade 22 to be drawn therebetween. The first inner plate portion 33A and second inner plate portion 33B may be formed integrally with the surface plate portion 32 or may be assembled separately therefrom. The stay 24 is configured to move along the drawing and housing directions of the window shade 22 while being in sliding contact with the inner surface of the second inner plate portion 33B inside the surface plate portion 32. The first inner plate portion 33A and second inner plate portion 33B constitute a case in which the windup device 60 is disposed. A gap portion is formed in the case on the drawing/housing direction side of the window shade 22 (that is, gap above a portion between the first inner plate portion 33A and the second inner plate portion 33B), and the surface plate portion 32 of the frame 30 is provided so as to cover this gap portion.

The cover 50 is a member formed of a resin or the like and is formed into a long slender plate shape so as to block the drawing slit 32h. For example, the both ends of the cover 50 are supported in a slidable manner by guide grooves 32g formed at both ends of the drawing slit 32h inside the surface plate portion 32 of the frame 30 (see FIG. 4), so that the cover 50 is disposed so as to move along the inner surface of the surface plate portion 32 in the width direction of the drawing slit 32h, between a closed position for completely blocking the drawing slit 32h (see FIG. 2) and an open position for opening the drawing slit 32h to an extent that the window shade 22 is drawn (in this case, position at which the drawing slit 32h opens completely, see FIG. 3 and FIG. 4). Needless to say, the cover may be configured to be supported so as to move by, for example, the configuration in which a guide shaft fixed to a frame is inserted into the cover, in addition to the above-mentioned configuration.

The coil spring 56 is a member that biases the cover 50 in the open direction and, in this case, is provided in the extended state between the both ends of the cover 50 and the part of the inner surface part at the end of the frame 30 on the side on which the cover 50 moves in the open direction (see FIG. 4). The cover 50 is constantly biased in the open direction by the elastic returning force of the coil spring 56.

The transmission member 40 is configured as a member that transmits the action of the stay 24 mounted to the window shade 22 wound up by the windup device 60 to the cover 50 as the force in the direction in which the cover 50 is closed.

In this case, the transmission member 40 includes a movable body 42 and a connecting member 48.

The movable body 42 is a member formed of a resin or the like and is disposed so as to move along the drawing and housing directions of the window shade 22 in the frame 30. More specifically, the movable body 42 is formed into an approximately rectangular solid shape, and a receiving projection 42a is formed so as to project along one main surface thereof (surface on the to-be-drawn window shade 22 side). The action of the stay 24 when the window shade 22 is housed is transmitted to the movable body 42 via the receiving projection 42a.

The movable body 42 is supported so as to move with the configuration below. That is, formed in the first inner plate portion 33A of the frame 30 is a guide hole portion 33Ah for movably disposing the movable body 42. A pair of movable body guiding portions 34 are provided at both side ends of the guide hole portion 33Ah. The movable body guiding portion 34 includes a pair of wall portions 34a extending along the drawing and housing directions of the window shade 22 and an end wall portion 34b provided on the housing direction side of the window shade 22 of the pair of wall portions 34a. The end wall portion 34b is formed in a semicircular-arc shape and connects the ends of the pair of wall portions 34a. Then, a groove 34g that has a constant width and extends along the drawing and housing directions of the window shade 22 is formed between the pair of wall portions 34a, and the groove 34g is blocked by the end wall portion 34b on the housing direction side of the window shade 22.

Formed on the side surfaces of the movable body 42, which are opposed to the pair of movable body guiding portions 34, are a main guide projection 43a and a pair of auxiliary guide projections 43b so as to sandwich the main guide projection 43a therebetween. The main guide projection 43a is formed into a cylindrical projection shape disposed so as to move and rotate in the groove 34g. The pair of auxiliary guide projections 43b are provided to project with a spacing for an approximately thickness dimension of the wall portion 34a from the main guide projection 43a, and are formed into a projection shape (in this case, cylindrical projection shape) so as to move along the outer surface of the wall portion 34a and the outer-peripheral-side arc-shaped surface of the end wall portion 34b.

In each of the side ends of the guide hole portion 33Ah, the main guide projection 43a is disposed in the groove 34g and the pair of auxiliary guide projections 43b are disposed so as to slide along the outer surfaces of the pair of wall portions 34a, so that the movable body 42 is movably supported.

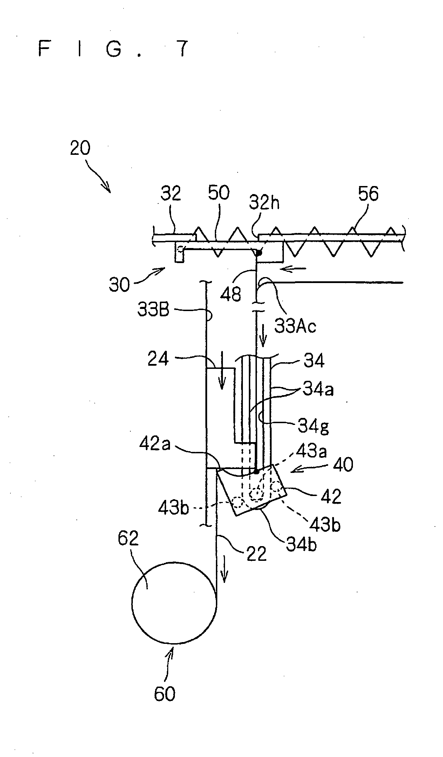

The movable body 42 behaves differently between the state of being located at the housing-direction-side end of the window shade 22 in the movable body guiding portion 34 and the state of being located in the range in which the movable body 42 is located at the position closer to the drawing direction side than the above-mentioned position. First, in the latter state, the state in which the linear wall portion 34a is sandwiched between the main guide projection 43a and each of the pair of auxiliary guide portions 43b is maintained, and accordingly, the movable body 42 is maintained in a position in which the receiving projection 42a thereof extends along the drawing and housing directions of the window shade 22 (see FIG. 3, FIG. 4, FIG. 5 and FIG. 6, which is merely referred to as a receiving position below). Meanwhile, in the former state, the main guide projection 43a reaches the end of the groove 34g, and the pair of auxiliary guide projections 43b are disposed at positions of being allowed to move along the outer peripheral surface of the end wall portion 34b. Accordingly, the movable body 42 is capable of changing its position about the main guide projection 43a such that the pair of auxiliary guide projections 43b move along the outer peripheral surface of the end wall portion 34b. Specifically, the movable body 42 is capable of changing its position while being in the state in which the main guide projection 43a is disposed at the end of the groove 34g such that the receiving projection 42a moves toward the housing-direction-side of the window shade 22 (see FIG. 2 and FIG. 7, the state in which the position is changed in this manner is merely referred to as a clearance position below).

The stay 24 is configured to push the movable body 42 upon housing of the window shade 22, to thereby move the movable body 42 in the housing direction of the window shade 22. That is, the stay 24 has a thickness dimension so as to abut against the receiving projection 42a of the movable body 42 at least at the side end on the housing direction side when moving while being in sliding contact with the inner surface of the second inner plate portion 33B. Then, the window shade 22 is housed, and the stay 24 moves into the surface plate portion 32, whereby the stay 24 pushes the receiving projection 42a of the movable body 42 while being in sliding contact with the inner surface of the second inner plate portion 33B. Upon this, the movable body 42 is pushed and moves in the housing direction of the window shade 22 while being in the reception position. Then, when the main guide projection 43a reaches the end of the groove 34g, the movable body 42 changes its position to the clearance position so as to move the receiving projection 42a further toward the housing direction side of the window shade 22 while being in the state in which the main guide projection 43a is located at a fixed position.

The connecting member 48 is a member connecting the cover 50 and the movable body 42 and, in this case, the connecting member 48 is a linear member such as string, resin wire or metal wire. Further, for example, film members such as a resin film may be used as the connecting member. One end of the connecting member 48 is connected to the side edge on the proximal end side of the cover 50, while the other end of the connecting member 48 is connected to the part of the movable body 42 that corresponds to the main guide projection 43a in the direction in which the main guide projection 43a and the pair of auxiliary guide projections 43b are arranged. The connection configuration of the connecting member 48 is achieved by various configurations including well-known configurations such as pinch configuration, screw configuration and tie configuration. The connecting member 48 passes through the inner space of the cover 50 inside the surface plate portion 32, to thereby connect the cover 50 and the movable body 42. In the state in which the cover 50 is in the closed position, the connecting member 48 extends linearly between the cover 50 and the movable body 42 (see FIG. 2 and FIG. 7). Meanwhile, in the state in which the cover 50 is in the open position, the connecting member 48 is guided so as to bend in sliding contact with a corner portion 33Ac located on the side closer to the drawing slit 32h than the first inner plate portion 33A. The corner portion 33Ac itself may be a member separately mounted to the first inner plate portion 33A or may be a part of the first inner plate portion 33A. The force for moving the movable body 42 toward the housing direction of the window shade 22 is converted to the force toward the direction in which the cover 50 is closed in the sliding contact part of the connecting member 48 and the corner portion 33Ac, and is transmitted to the cover 50. As a result, the cover 50 is closed against the biasing force of the coil spring 56. Meanwhile, when the movable body 42 moves in the drawing direction of the window shade 22, the force for moving the movable body 42 toward the direction in which the cover 50 is closed is released, whereby the cover 50 is capable of moving in the open direction, which is opposite to the above. Accordingly, the cover 50 opens by the biasing force of the coil spring 56.

A difference absorbing mechanism for absorbing a difference between the action of the stay 24 and the action of the cover 50 is installed in the opening and closing configuration of the cover 50 described above. In this case, the difference absorbing mechanism is achieved with the configuration installed in the transmission member 40 described below.

That is, the cover 50 and the movable body 42 are connected to each other via the connecting member 48 as described above and, in the normal operating state, the position of the movable body 42 corresponds to the position of the cover 50 approximately one to one. In the moving section of the movable body 42 that corresponds to the section in which the cover 50 moves from the open position to the closed position, the movable body 42 is disposed in the section corresponding to the pair of wall portions 34a of the movable body guiding portion 34 and is kept in the reception position. Accordingly, when the stay 24 moves toward the housing direction side upon housing of the window shade 22, the stay 24 pushes the movable body 42, so that the movable body 42 moves toward the housing direction side in conjunction with the movement of the stay 24 approximately one to one. This causes the cover 50 to move from the open position to the closed position against the biasing force of the coil spring 56.

In the state in which the cover 50 has moved to the closed position, the movable body 42 reaches the housing-direction-side end of the groove 34g and is capable of changing its position to the clearance position. Then, when the stay 24 moves toward the housing direction side upon further housing of the window shade 22, the stay 24 pushes the receiving projection 42a of the movable body 42. This causes the movable body 42 to change its position to the clearance position while being in the state in which the main guide projection 43a is located at the housing-direction-side end of the groove 34g. On this occasion, the point at which the connecting member 48 is connected to the movable body 42 is kept approximately at a fixed position. Accordingly, the tensile force of the connecting member 48 hardly acts regardless of the movement of the stay 24 and the position change of the movable body 42, and the force for moving the cover 50 further beyond the closed position is suppressed. As described above, in the state in which the stay 24 pushes the movable body 42 until the cover 50 closes, the movable body 42 changes its position to the clearance position so as to retract from the moving path of the stay 24, which enables to absorb a difference.

In the vehicle window shade device 20 as described above, the cover 50 has moved to the open position by the biasing force of the coil spring 56 in the state in which the window shade 22 is drawn (see FIG. 3 to FIG. 5). The movable body 42 has moved toward the drawing direction side so as to be pulled by the cover 50 via the connecting member 48.

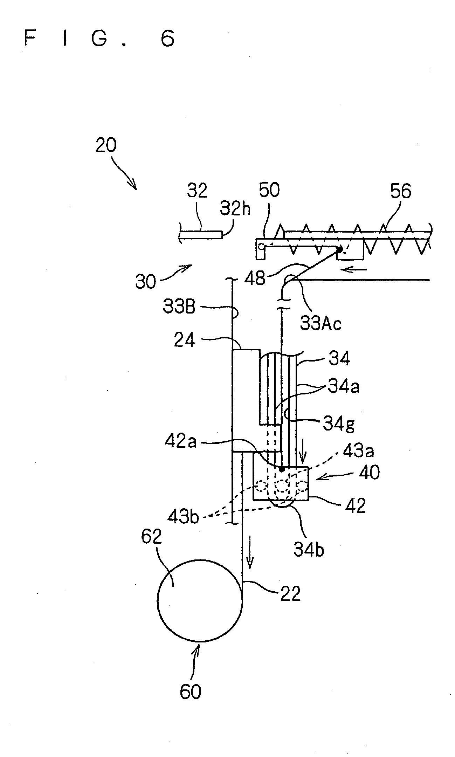

The window shade 22 is housed by the windup force of the windup device 60 and the stay 24 moves into the surface plate portion 32 through the drawing slit 32h in this state, whereby the stay 24 abuts against the movable body 42 and pushes the movable body 42 toward the housing direction (see FIG. 6). This causes the movable body 42 to move toward the housing direction side while keeping the reception position. Accordingly, the cover 50 is pulled by the movable body 42 via the connecting member 48 and moves from the open position to the closed position against the biasing force of the coil spring 56.

Then, the cover 50 reaches the closed position in the state in which the movable body 42 reaches the housing-direction-side end of the movable body guiding portion 34 (FIG. 2 and FIG. 7). After that, the movable body 42 changes its position from the reception position to the clearance position even if the stay 24 moves further toward the housing direction side by the moving force of the windup device 60, and thus, does not substantially pull the connecting member 48. This enables to move the stay 24 further toward the housing direction side while keeping the cover 50 at the closed position.

The position at which the stay 24 stops on the housing direction side is determined by the position of the end of the guide groove 32g that guides and supports the stay 24. The stay 24 may be set to stop in the state in which the cover 50 reaches the closed position. Needless to say, it is preferable that the stay 24 be set to stop in the state in which the cover 50 has moved toward the housing direction side further from the state in which the cover 50 has reached the closed position such that the cover 50 moves to the closed position more reliably in consideration of, for example, a manufacturing error or an assembling error.

According to the vehicle window shade device 20 configured as described above, the action of the stay 24 attached to the window shade 22 that is wound up and housed by the windup device 60 is transmitted as the force toward the direction in which the cover 50 is closed via the transmission member 40 including the movable body 42 and the connecting member 48. This enables to close the cover 50 in conjunction with winding up of the window shade 22. On this occasion, the transmission member 40 is provided with the difference absorbing mechanism that absorbs a difference between the action of the stay 24 and the action of the cover 50. In this case, the difference absorbing mechanism capable of moving the stay 24 further toward the housing direction side is provided while being in the state in which the cover 50 is stopped at the closed position. Accordingly, the cover 50 is closed more completely in conjunction with the action of the stay 24.

In particular, if the stay 24 is allowed to move further toward the housing direction side from the state in which the cover 50 has moved to the closed position while a difference is absorbed, it is possible to close the cover 50 more completely irrespective of a manufacturing error or an assembling error.

The movable body 42 is pushed by the stay 24 that moves upon winding up of the window shade 22, to thereby move toward the housing direction of the window shade 22. As a result, the cover 50 is biased in the closing direction via the connecting member 48. On the other hand, when the window shade 22 is drawn, the movable body 42 moves toward the drawing direction of the window shade 22, so that the cover 50 is allowed to move to the open position. Then, the cover 50 moves to the open position by the biasing force of the coil spring 56. This enables to automatically open and close the cover 50 in conjunction with drawing and housing of the window shade 22.

The movable body 42 changes its position from the reception position to the clearance position in the state in which the stay 24 pushes the movable body 42 until the cover 50 moves to the closed position, and accordingly, a difference between the moving amount of the stay 24 and the moving amount of the cover 50 is absorbed, whereby the cover 50 is closed more completely. Therefore, the cover 50 and the movable body 42 are not susceptible to unnecessary load exerted thereon in the state in which the cover 50 is closed. In addition, a difference is not absorbed by elastic deformation or the like, and accordingly, the cover 50 and the movable body 42 are resistant to, for example, fatigue deterioration.

The cover 50 is configured so as to slide and close the drawing slit 32h, which prevents, for example, the cover 50 from projecting outwardly in the state in which the cover 50 is opened.

While the configuration is made to absorb a difference upon position change of the movable body 42 that pulls the cover 50 via the connecting member 48 in the embodiment above, other configuration is employable as the difference absorbing mechanism. As the difference absorbing mechanism, for example, the whole or part of a connecting member may be configured to elastically deform, such as rubber or coil spring, in place of causing the movable body 42 to change its position as described above, to thereby absorb a difference at the elastically deformed part. Alternatively, the difference absorbing mechanism does not necessarily need to be provided in the transmission member 40 but may be provided in a stay, cover or the like. For example, the configuration may be made to absorb a difference upon elastic deformation of the part of the stay that operates to close the cover, the part of the cover that experiences the force toward the closing direction, or the like.

Further, the cover 50 is configured to open and close the drawing slit 32h by sliding in the embodiment above, which is not necessarily required. The configuration may be made such that a cover is mounted so as to rotate about a predetermined axis, to thereby cover a drawing slit to freely open and close. In this case, it suffices that a biasing member such as a helical coil spring is provided in the direction in which a cover opens and a connecting member is disposed so as to close the cover upon pulling of the connecting member.

While the invention has been shown and described in detail, the foregoing description is in all aspects illustrative and not restrictive. It is therefore understood that numerous modifications and variations can be devised without departing from the scope of the invention as defined by the appended claims.

### Description of Reference Symbols

- 10: side window
- 20: vehicle window shade device
- 22: window shade
- 24: stay
- 30: frame
- 32: surface plate portion
- 32h: drawing slit
- 34: movable body guiding portion
- 40: transmission member
- 42: movable body
- 43a: main guide projection
- 43b: auxiliary guide projection
- 48: connecting member
- 50: cover
- 60: windup device

## Claims

1. A vehicle window shade device (20) that is adapted to cover a window (10) of a vehicle for allowing the window (10) to be shielded and opened, comprising:
a window shade (22) configured to shield said window (10);
a stay (24) attached to a drawing-direction-side edge of said window shade (22);
a windup device (60) adapted to wind up said window shade (22) in a manner of being drawn therefrom and housed therein;
a case (33A, 33B) in which said windup device (60) is disposed, including a gap portion in the drawing and housing directions of said window shade (22);
a frame (30) adapted to cover said gap portion and including a drawing slit (32h) configured to allow said stay (24) to slide;
a cover (50) provided in said drawing slit (32h) to be opened and closed;
a biasing member (56) adapted to bias said cover (50) toward an open direction; and
a transmission member (40) adapted to transmit an action of said stay (24) attached to said window shade (22) wound up by said windup device (60) to said cover (50) as a force in a direction in which said cover (50) is closed, **characterized in that**
at least one of said cover (50), said stay (24) and said transmission member (40) includes a difference absorbing mechanism installed therein, said difference absorbing mechanism absorbing a difference between the action of said stay (24) and the action of said cover (50).

2. The vehicle window shade (20) device according to claim 1, wherein said transmission member (40) includes:
a movable body (42) provided so as to move along the drawing and housing directions of said window shade (22), and adapted to move toward the housing direction side of said window shade (22) when being pushed by said stay (24) upon winding up of said window shade (22); and
a connecting member (48) connecting said cover (50) and said movable body (42) so as to move said cover (50) in the closing direction upon movement of said movable body (42) toward the housing direction side of said window shade (22) and allow said cover (50) to move toward the open direction upon movement of said movable body (42) toward the drawing direction side of said window shade (22).

3. The vehicle window shade device (20) according to claim 2, wherein said difference absorbing mechanism is installed to change a position of the movable body (42) such that said movable body (42) retracts from a moving path of said stay (24) in a state in which said stay (24) pushes said movable body (24) until said cover (50) closes upon winding up of said window shade (22).

4. The vehicle window shade (20) device according to any one of claims 1 to 3, wherein said cover (50) is mounted to said frame (30) so as to slide.

## Patentansprüche

1. Blendschutzvorrichtung (20) für Fahrzeugfenster, welche geeignet ist, ein Fenster (10) eines Fahrzeugs abzudecken, so dass das Fenster abgeschirmt und geöffnet werden kann, umfassend:
einen Rollvorhang (22), der so ausgebildet ist, dass er das Fenster (10) abschirmt;
eine Strebe (24), die an einer Kante der Herausziehrichtungsseite des Rollvorhangs (22) befestigt ist;
eine Aufwicklungsvorrichtung (60), welche geeignet ist, den Rollvorhang (22) derart aufzuwickeln, dass er daraus heraus gezogen und darin aufgenommen werden kann;
ein Gehäuse (33A, 33B), in dem die Aufwicklungsvorrichtung (60) angeordnet ist und das einen Spaltabschnitt in den Herauszieh- und Aufnahmerichtungen des Rollvorhangs (22) umfasst;
einen Rahmen (30), der geeignet ist, den Spaltabschnitt abzudecken und einen Zugschlitz (32h) umfasst, der so ausgebildet ist, dass er ein Gleiten der Strebe (24) ermöglicht;
eine Abdeckung (50), die in dem Zugschlitz (32h) vorgesehen ist, um geöffnet und geschlossen zu werden;
ein Vorspannungselement (56), welches geeignet ist, die Abdeckung (50) zu einer geöffneten Richtung vorzuspannen; und
ein Übertragungselement (40), welches geeignet ist, eine Bewegung der Strebe (24), die an dem Rollvorhang (22) befestigt ist, welcher durch die Aufwicklungsvorrichtung (60) aufgewickelt wird, auf die Abdeckung (50) als eine Kraft in einer Richtung, in der die Abdeckung (50) geschlossen wird, zu übertragen, **dadurch gekennzeichnet, dass**
wenigstens einer von der Abdeckung (50), der Strebe (24) und dem Übertragungselement (40) einen darin untergebrachten Differenzausgleichenden Mechanismus umfasst, wobei der Differenzausgleichende Mechanismus eine Differenz zwischen der Bewegung der Strebe (24) und der Bewegung der Abdeckung (50) ausgleicht.

2. Blendschutzvorrichtung (20) für Fahrzeugfenster gemäß Anspruch 1, wobei das Übertragungselement (40) umfasst:
einen beweglichen Körper (42), der derart vorgesehen ist, dass er sich entlang der Herauszieh- und Aufnahmerichtungen des Rollvorhangs (22) bewegt, und geeignet ist, sich in Richtung der Aufnahmerichtungsseite des Rollvorhangs (22) zu bewegen, wenn er durch die Strebe (24) nach Aufwickeln des Rollvorhangs (22) angeschoben wird; und
ein Verbindungselement (48), welches die Abdeckung (50) und den beweglichen Körper (42) verbindet, so dass die Abdeckung (50) nach Bewegung des beweglichen Körpers (42) in Richtung Aufnahmerichtungsseite des Rollvorhangs (22) in der Schließrichtung bewegt wird, und es der Abdeckung (50) ermöglicht wird, sich nach Bewegung des beweglichen Körpers (42) in Richtung der Herausziehrichtungsseite des Rollvorhangs (22) in Richtung der Öffnungsrichtung zu bewegen.

3. Blendschutzvorrichtung (20) für Fahrzeugfenster gemäß Anspruch 2, wobei der Differenz-ausgleichende Mechanismus angeordnet ist, um eine Position des beweglichen Körpers (42) derart zu verändern, dass der bewegliche Körper (42) von einer Bewegungsbahn der Strebe (24) in einen Zustand, in dem die Strebe (24) den beweglichen Körper (24) schiebt, bis sich die Abdeckung (50) nach Aufwickeln des Rollvorhangs (22) schließt, zurückgezogen wird.

4. Blendschutzvorrichtung (20) für Fahrzeugfenster gemäß irgendeinem der Ansprüche 1 bis 3, wobei die Abdeckung (50) an dem Rahmen (30) gleitend befestigt ist.

## Revendications

1. Dispositif à store de vitre de véhicule (20) qui est adapté pour couvrir une vitre (10) d'un véhicule pour permettre à la vitre (10) d'être protégée et ouverte, comprenant :
un store de vitre (22) configuré pour protéger ladite vitre (10) ;
un étai (24) fixé à un bord côté direction de tirage dudit store de vitre (22) ;
un dispositif d'enroulement (60) adapté pour enrouler ledit store de vitre (22) d'une façon à être tiré à partir de celui-ci et logé dans celui-ci ;
un boîtier (33A, 33B) dans lequel ledit dispositif d'enroulement (60) est disposé, comprenant une partie d'espace dans les directions de tirage et de logement dudit store de vitre (22) ;
un cadre (30) adapté pour couvrir ladite partie d'espace et comprenant une fente de tirage (32h) configurée pour permettre audit étai (24) de coulisser ;
un couvercle (50) prévu dans ladite fente de tirage (32h) pour être ouvert et fermé ;
un élément de sollicitation (56) adapté pour solliciter ledit couvercle (50) vers une direction d'ouverture ; et
un élément de transmission (40) adapté pour transmettre une action dudit étai (24) fixé audit store de vitre (22) enroulé par ledit dispositif d'enroulement (60) audit couvercle (50) comme une force dans une direction dans laquelle ledit couvercle (50) est fermé, **caractérisé en ce que**
au moins un parmi ledit couvercle (50), ledit étai (24) et ledit élément de transmission (40) comprend un mécanisme d'absorption de différence installé dans celui-ci, ledit mécanisme d'absorption de différence absorbant une différence entre l'action dudit étai (24) et l'action dudit couvercle (50).

2. Dispositif à store de vitre de véhicule (20) selon la revendication 1, dans lequel ledit élément de transmission (40) comprend :
un corps mobile (42) prévu afin de se déplacer le long des directions de tirage et de logement dudit store de vitre (22), et adapté pour se déplacer vers le côté direction de logement dudit store de vitre (22) lorsqu'il est poussé par ledit étai (24) lors de l'enroulement dudit store de vitre (22) ; et
un élément de raccordement (48) raccordant ledit couvercle (50) et ledit corps mobile (42) afin de déplacer ledit couvercle (50) dans la direction de fermeture lors du mouvement dudit corps mobile (42) vers le côté direction de logement dudit store de vitre (22) et permettre audit couvercle (50) de se déplacer vers la direction d'ouverture lors du mouvement dudit corps mobile (42) vers le côté direction de tirage dudit store de vitre (22).

3. Dispositif à store de vitre de véhicule (20) selon la revendication 2, dans lequel ledit mécanisme d'absorption de différence est installé pour changer une position du corps mobile (42) de sorte que ledit corps mobile (42) se retire d'un trajet de déplacement dudit étai (24) dans un état dans lequel ledit étai (24) pousse ledit corps mobile (24) jusqu'à ce que ledit couvercle (50) se ferme lors de l'enroulement dudit store de vitre (22).

4. Dispositif à store de vitre de véhicule (20) selon une quelconque des revendications 1 à 3, dans lequel ledit couvercle (50) est monté sur ledit cadre (30) afin de coulisser.
